# EUROPÄISCHE PATENTSCHRIFT

(11) **EP 0 521 290 B1**
(45) Veröffentlichungstag und Bekanntmachung des Hinweises auf die Patenterteilung: **23.10.1996**
(21) Anmeldenummer: 92108718.5
(22) Anmeldetag: 23.05.1992
(51) Int. Cl.: G02B 6/44, G02B 6/38

(54) **Spleissverbindung von zwei optischen Flachkabeln**
Splicing of two flat optical cables
Epissure de deux câbles optiques plats

(30) Priorität: 05.07.1991 DE 4122291
(43) Veröffentlichungstag der Anmeldung: 07.01.1993
(73) Patentinhaber: AEG KABEL Aktiengesellschaft, D-41201 Mönchengladbach (DE)
(72) Erfinder: Delage, Peter, Dipl.-Ing., W-4053 Jüchen (DE); Koch, Uwe, W-4050 Mönchengladbach 4 (DE); Hög, Georg, Dipl.-Ing., W-4050 Mönchengladbach 1 (DE)
(74) Vertreter: Mende, Eberhard, Dipl.-Ing.

(56) Entgegenhaltungen:
- DE-A- 3 828 553
- PATENT ABSTRACTS OF JAPAN vol. 15, no. 74 (E-1036)21. Februar 1991 & JP A 2294210
- PATENT ABSTRACTS OF JAPAN vol. 9, no. 26 (P-332)5. Februar 1985 & JP A 59171918
- PATENT ABSTRACTS OF JAPAN vol. 8, no. 79 (P-267)11. April 1984 & JP A 58223111

## Beschreibung

Die Erfindung betrifft eine Spleißverbindung von zwei optischen Kabeln nach dem Oberbegriff des Anspruchs 1. Eine ähnliche Spleißverbindung ist beispielsweise aus der DE-OS 38 28 553 bekannt. Bei dieser Spleißverbindung zweier optischer Kabel sind die Zugentlastungselemente der optischen Kabel überlappend angeordnet und kraftschlüssig miteinander gekoppelt. Im Bereich der Spleißverbindung erhält man nahezu die mechanische Eigenschaft des Kabels, wenn die Zugentlastungselemente im überlappungsbereich miteinander verklebt sind.

Bei der DE-OS 34 28 815 geht die Erfindung von einer Aufnahme für einen Lichtwellenleiterspleiß aus, bei welcher 2 Plättchen, die beide auf einer Seite mit einem klebenden Material beschichtet sind, den Spleiß zwischen ihren klebenden Flächen aufnehmen. Die Zugentlastung für die Lichtwellenleiter besteht in einer schalenförmigen Aufnahme, worin die Plättchen eingeklemmt sind. Die Enden der Aufnahme stehen über die Plättchen hinaus und sind um die Schutzmäntel der Lichtwellenleiter gequetscht.

Die DE-OS 38 28 553 betrifft die Spleißverbindung zweier Kabel unter Verwendung von Spleißhülsen in Verbindungsbereich. Diese Maßnahmen führen zu einer aufwändigen Konstruktion. Die DE-OS 34 28 815 handelt zwar von der Spleißverbindung zweier optischen Adern oder Lichtwellenleiter, setzt jedoch voraus, daß ein separater mechanischer Spleißschutz vorgesehen ist. Eine Muffentechnik zum Schutz des Leitungsspleißes bedeutet aber stets einen erhöhten Aufwand. Außerdem ist die Flexibilität an der Verbindungsstelle eingeschränkt.

Der Erfindung liegt daher die Aufgabe zugrunde, eine Spleißverbindung optischer Adern zu schaffen, welche die symmetrisch zur optischen Faser angeordneten Zugentlastungselemente in der Weise anzuordnen gestattet, daß beim Spleißen die Flexibilität sowie die Bruch- und Zugfestigkeit der Leitung erhalten bleibt. Diese Aufgabe wird nach der Erfindung durch die im Kennzeichen des Anspruchs 1 aufgeführten Merkmale gelöst. Weiterbildungen der Erfindung sind in den Unteransprüchen beschrieben.

Bei der Erfindung wird vorausgesetzt, daß die Zugentlastungselemente der zu verbindenden optischen Adern symmetrisch zur optischen Faser angeordnet sind. Im Bereich der Spleißstelle sind die beiden optischen Adern mit den von den optischen Fasern getrennten Zugentlastungselementen so verbunden, daß die Symmetrie der Anordnung erhalten bleibt. Das erreicht man dadurch, daß die Zugentlastungselemente der einen optischen Ader gegenüber den Zugentlastungselementen der damit zu verbindenden zweiten optischen Ader um die Symmetrie-Achse um einen bestimmten Betrag verdreht angeordnet sind. Dieser Winkelbetrag ergibt sich daraus, daß die Zugentlastungselemente nicht stumpf miteinander verbunden sind, sondern in einem etwas flach gedrückten Zustand gegeneinander gedrückt und miteinander verbunden sind.

Wenn die beiden optischen Adern durch Umflechtung mit einem Garn gegen Zugbelastungen geschützt sind, können aus dieser Umflechtung an der Spleißstelle Stränge gebildet werden, welche symmetrisch zur Symmetrie-Achse der Ader angeordnet sind.

Ein Ausführungsbeispiel der Erfindung wird nachstehend anhand der Zeichnung näher erläutert; dabei zeigt:
- Figur 1 ein optisches Flachkabel und
- Figur 2 die Spleißverbindung zweier Flachkabel.

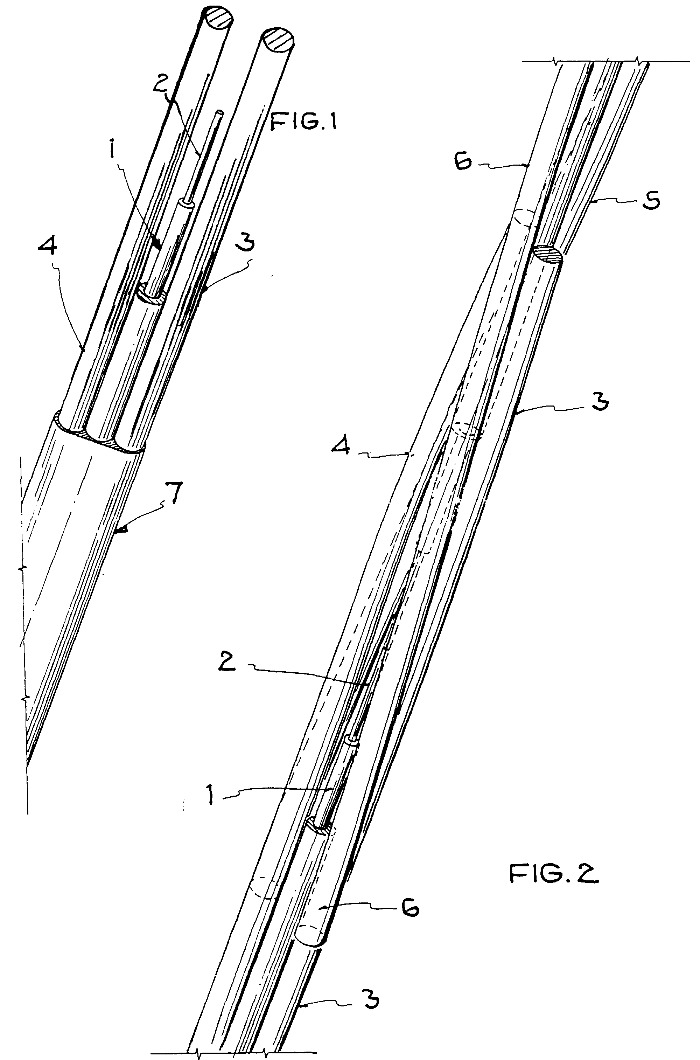

Am Ende eines Flachkabels 7 nach Figur 1 werden die beiden Zugentlastungselemente 3 und 4 des optischen Kabels 7 von der eigentlichen optischen Ader bzw. Festader 1 getrennt. Danach sind sie so mit den entsprechenden Zugentlastungselementen 5 und 6 des zweiten optischen Kabels zu verbinden, daß sie jeweils um einen bestimmten Winkelbetrag aus der bisherigen Symmetrieebene herausgedreht und nebeneinander liegend miteinander verbunden werden (s. Fig. 2). Die Verbindung geschieht entweder durch Verkleben, oder die Zugentlastungselemente werden mit einer Oberflächen-Beschichtung versehen und miteinander verschweißt. Die Faser 2 wird im Bereich des Spleißes mit einer Überlänge geführt. Bei der Herstellung der Verbindung der Zugentlastungselemente ist darauf zu achten, daß zwar die Zugentlastungselemente straff gespannt sind, jedoch die optische Faser noch eine geringe Durchbiegung aufweist. Die Spleißstelle kann im übrigen noch mit einem Tropfen Schmelzkleber versiegelt werden. Das optische Kabel 7 weist beispielsweise eine Polyamidaußenhülle auf.

Diese Technik läßt sich allgemein auch dann anwenden, wenn die Zugentlastungselemente im optischen Kabel in einer konzentrischen Lage angebracht und daher nicht von vorneherein aufgeteilt sind. In diesem Falle wird aus den Zugentlastungselementen der Kabelenden eine Anordnung mit zwei symmetrischen Teilsträngen geschaffen, die dann in einer zu dem durch Figur 2 erläuterten Vorgehen miteinander verbunden werden.

## Patentansprüche

1. Spleißverbindung von zwei optischen Kabeln (7) mit je einer optischen Ader (1) und parallel dazu verlaufenden Zugentlastungselementen (3, 4, 5, 6), die zumindest am Ende des jeweiligen Kabels in Teilstränge aufgeteilt sind, die symmetrisch um die jeweilige optische Ader angeordnet und davon getrennt sind, wobei die optische Ader des einen Kabels mit der optischen Ader des anderen Kabels gespleißt ist, und wobei die Teilstränge des einen Kabels sich im Bereich der Spleißstelle mit den Teilsträngen des anderen Kabels überlappen und paarweise kraftschlüssig miteinander verbunden sind, **dadurch gekennzeichnet**, daß die beiden Kabel (7) Flachkabel sind, daß die Zugentlastungselemente (3, 4, 5, 6) am Ende jedes Kabels in zwei diametral gegenüberliegenden Teilstränge aufgeteilt sind, die zusammen mit der jeweiligen Ader (1) in einer Ebene liegen, und daß die zwei Teilstränge jedes Kabels im Bereich der Spleißstelle aus dieser Ebene heraus um die zugeordnete Ader verdreht angeordnet sind, wobei die Teilstränge des einen Kabels mit den Teilsträngen des anderen Kabels paarweise so nebeneinander liegend angeordnet und verbunden sind, daß sie jeweils einen im wesentlichen wendelförmig verlaufenden Weg um die gespleißten Adern beschreiben.

2. Spleißverbindung nach Anspruch 1, dadurch gekennzeichnet, daß die optischen Ader (1) im Bereich des Spleißes mit einer Überlänge geführt sind.

3. Spleißverbindung nach einem der Ansprüche 1 oder 2, dadurch gekennzeichnet, daß die Zugentlastungselemente, welche die optische Ader (1) umgeben, eine Oberflächen-Beschichtung aufweisen.

4. Spleißverbindung nach einem der Ansprüche 1 bis 3, dadurch gekennzeichnet, daß die Zugentlastungslemente über ihre Oberflächen-Beschichtung paarweise thermisch verbunden sind.

5. Spleißverbindung nach einem der Ansprüche 1 bis 4, dadurch gekennzeichnet, daß die Zugentlastungselemente aus miteinander verklebten Fasern bestehen und damit auch als Stauchschutz dienen.

## Claims

1. Spliced joint of two optical cables (7) having in each case one buffered optical fibre (1) and stress members (3, 4, 5, 6) which extend parallel thereto and, at least at the end of the respective cable, are split into substrands which are arranged symmetrically about the respective buffered optical fibre and are separated therefrom, the buffered optical fibre of one cable being spliced with the buffered optical fibre of the other cable, and the substrands of one cable overlapping in the region of the splice point with the substrands of the other cable and being connected to one another in a force-closed fashion in pairs, characterized in that the two cables (7) are flat cables, in that the stress members (3, 4, 5, 6) are split at the end of each cable into two diametrically opposite substrands which lie in one plane together with the respective buffered fibre (1), and in that the two substrands of each cable are arranged in the region of the splice point rotated out of this plane about the assigned buffered fibre, the substrands of one cable being arranged in pairs with the substrands of the other cable lying next to one another and connected in such a way that in each case they describe a path which extends essentially in a helical fashion around the spliced buffered fibres.

2. Spliced joint according to Claim 1, characterized in that the buffered optical fibres (1) are guided with an excess length in the region of the splice.

3. Spliced joint according to one of Claims 1 and 2, characterized in that the stress members which surround the buffered optical fibre (1) have a surface coating.

4. Spliced joint according to one of Claims 1 to 3, characterized in that the stress members are thermally connected in pairs via their surface coating.

5. Spliced joint according to one of Claims 1 to 4, characterized in that the stress members comprise inter-bonded fibres and thus also serve to protect against compression.

## Revendications

1. Raccordement en épissure de deux câbles optiques (7) comportant chacun un conducteur optique (1) et des éléments antitraction (3, 4, 5, 6), parallèles audit conducteur, qui sont divisés en tronçons au moins à l'extrémité du câble respectif, lesquels tronçons sont disposés symétriquement autour du conducteur respectif et en sont séparés, le conducteur optique de l'un des câbles étant épissé avec le conducteur optique de l'autre câble, et les tronçons de l'un des câbles chevauchant et étant appariés par adhérence avec les tronçons de l'autre câble dans la zone de l'épissure, caractérisé en ce que les deux câbles (7) sont des câbles plats, en ce que les éléments antitraction (3, 4, 5, 6) sont répartis à l'extrémité de chaque câble en deux tronçons opposés diamétralement se trouvant dans le même plan que le conducteur (1) respectif, et en ce que, dans la zone de l'épissure, les deux tronçons de chaque câble sortent de ce plan et sont disposés en torsion autour du conducteur associé, les tronçons de l'un des câbles étant appariés avec les tronçons de l'autre câble et étant disposés côte-à-côte et reliés avec ceux-ci de manière à décrire une trajectoire sensiblement hélicoïdale autour des conducteurs épissés.

2. Raccordement en épissure suivant la revendication 1, caractérisé en ce que les conducteurs optiques (1) sont guidés avec une surlongueur dans la zone de l'épissure.

3. Raccordement en épissure suivant l'une des revendications 1 ou 2, caractérisé en ce que les éléments antitraction entourant les conducteurs optiques (1) présentent un revêtement de surface.

4. Raccordement en épissure suivant l'une des revendications 1 à 3, caractérisé en ce que les éléments antitraction sont reliés thermiquement par paires par l'intermédiaire de leur revêtement de surface.

5. Raccordement en épissure suivant l'une des revendications 1 à 4, caractérisé en ce que les éléments antitraction sont constitués de fibres collées entre elles, et servent donc également de protection anticompression.
